# EUROPÄISCHE PATENTSCHRIFT

(11) **EP 1 319 557 B1**
(45) Veröffentlichungstag und Bekanntmachung des Hinweises auf die Patenterteilung: **23.08.2006**
(21) Anmeldenummer: 02021085.2
(22) Anmeldetag: 21.09.2002
(51) Int. Cl.: B60R 21/09, B60T 7/06

(54) **Pedallagerung für ein Kraftfahrzeug**
Pedal support for a motor vehicle
Support de pédale pour un véhicule automobile

(30) Priorität: 14.12.2001 DE 10161565
(43) Veröffentlichungstag der Anmeldung: 18.06.2003
(73) Patentinhaber: AUDI AG, 85045 Ingolstadt (DE)
(72) Erfinder: Verbeck, Gerd, 85049 Ingolstadt (DE); Plail, Herbert, 80687 München (DE)
(74) Vertreter: Asch, Konrad

(56) Entgegenhaltungen:
- EP-A- 0 827 874
- EP-A- 1 031 485
- DE-A- 19 652 014
- DE-C- 10 040 043

## Beschreibung

Die Erfindung betrifft eine Pedallagerung für ein Kraftfahrzeug, insbesondere für ein Bremspedal, gemäß dem Oberbegriff des Patentanspruches 1.

Aus der EP 1031 485 A2 ist eine derartige Pedallagerung bekannt.

Der Aufbau dieser bekannten Pedallagerung ist aber sehr bauteilintensiv und daher aufwänding, da insbesondere zwei separate Schrauben druckfedern und ein zweiteiliger Lagerbolzen, der sich an separat vorzusehenen Lagerhülsenschultern abstützt, vorgesehen sind.

Es ist daher Aufgabe der vorliegenden Erfindung, eine Pedallagerung für ein Kraftfahrzeug zu schaffen, die einfach mit verrigertem Bauteilaufwand hergestellt werden kann.

Es ist daher Aufgabe der vorliegenden Erfindung, eine Pedallagerung für ein Kraftfahrzeug zu schaffen, die einfach mit verringertem Bauteilaufwand hergestellt werden kann.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird somit vorgeschlagen, die Pedalachse durch zwei in die Pedalnabe und den U-förmigen Lagerbock einsteckbare Lagerbolzen zu bilden, die durch Federkraft einer einzigen Schraubenfeder entgegen der Einsteckrichtung vorgespannt sind und die durch das zumindest eine Verriegelungselement gehalten sind, wobei das Verriegelungselement mit einem in Fahrrichtung des Kraftfahrzeuges hinter dem Pedalbock verlaufenden Querträger in Wirkverbindung steht. Durch die vorgeschlagenen Maßnahmen wird zunächst eine herkömmliche Lagerung verwirklicht, die jedoch bei einem Frontalcrash bei einer entsprechenden Verlagerung des Verriegelungselementes ein Herausgleiten des durch Federkraft vorgespannten Lagerbolzen ermöglicht, so dass die Pedallagerung aufgehoben und das entsprechende Pedal frei verlagerbar ist. Ein Eindringen des Pedales in den Fußraum des Kraftfahrzeuges ist damit unterbunden.

Das Verriegelungselement kann bevorzugt ein U-förmiger Bügel sein, dessen Basisabschnitt mit dem Querträger in Wirkverbindung steht und dessen Schenkel die beiden Lagerbolzen entgegen der Federkraft halten. Dementsprechend kann die Pedallagerung mit dem Lagerbock eine Vormontageeinheit bilden, wobei die vorgespannte Schraubendruckfeder als innere Kraft wirkt.

Ferner kann vorteilhaft das Verriegelungselement formschlüssig an Kopfabschnitten der eingesteckten Lagerbolzen justiert sein, wobei sich diese Justierung bevorzugt erst nach einer definierten Kraft auf das Verriegelungselement löst.

Schließlich kann an den einen Lagerbolzen ein im Durchmesser verringerter Führungsstift angeformt sein, der in einer zentrischen Bohrung des anderen Lagerbolzens geführt ist, wodurch eine verwindungssteife Pedallagerung geschaffen ist. Ggf. kann die Führungsbasis des Führungsstiftes dadurch verlängert werden, dass der die zentrische Bohrung tragende Lagerbolzen einen entsprechenden Verlängerungsabschnitt aufweist.

Weitere vorteilhafte Merkmale der Erfindung sind der nachfolgenden Beschreibung eines Ausführungsbeispieles entnehmbar. Die schematische Zeichnung zeigt in:
- Fig. 1: einen senkrechten Längsschnitt durch eine Pedallagerung für ein Bremspedal in einem Kraftfahrzeug, mit einem an der Stirnwand des Kraftfahrzeuges befestigtem Pedalbock und einen in Fahrtrichtung dahinter liegenden Querträger; und
- Fig. 2: einen Schnitt entlang der Linie II-II der Fig. 1 durch die Pedallagerung.

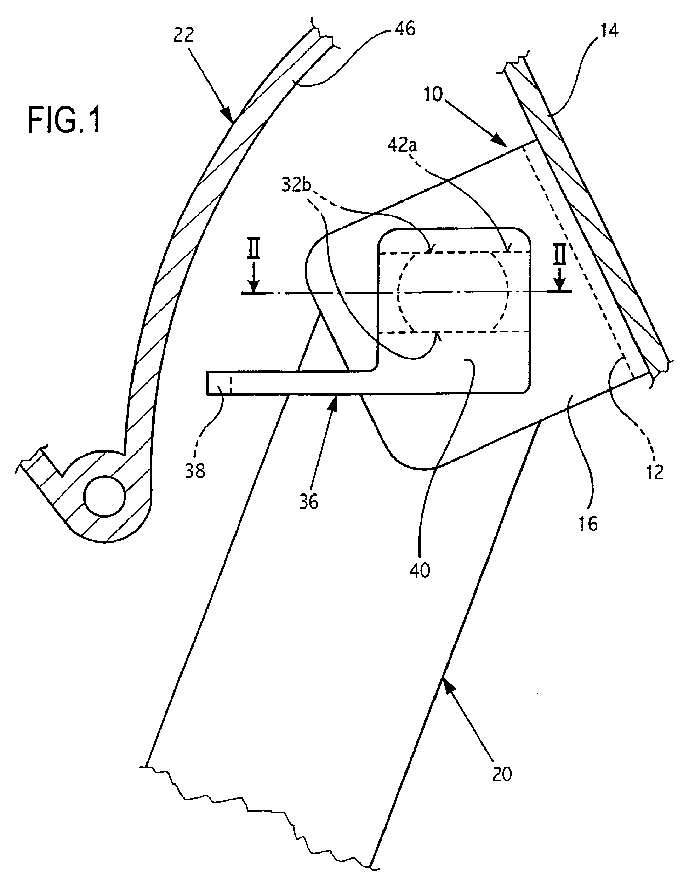

Gemäß Fig. 1 ist ein U-förmiger Pedalbock 10 mit einer Lagerplatte 12 an einer Stirnwand 14 (auch als Spritzwand bezeichnet) eines Kraftfahrzeuges befestigt und weist zwei Schenkel 16,18 auf, zwischen denen ein Pedal bzw. Bremspedal 20 schwenkbar gelagert ist.

In Fahrtrichtung des Kraftfahrzeuges dahinter und relativ nahe dem Pedalbock 10 verläuft zudem ein Querträger 22, der aufgrund der vom Querschnitt ersichtlichen Konfiguration relativ biegesteif gestaltet ist und der in bekannter und nicht dargestellter Weise das Armaturenbrett des Kraftfahrzeuges, eine Lenkungskonsole und weitere Anbauten trägt.

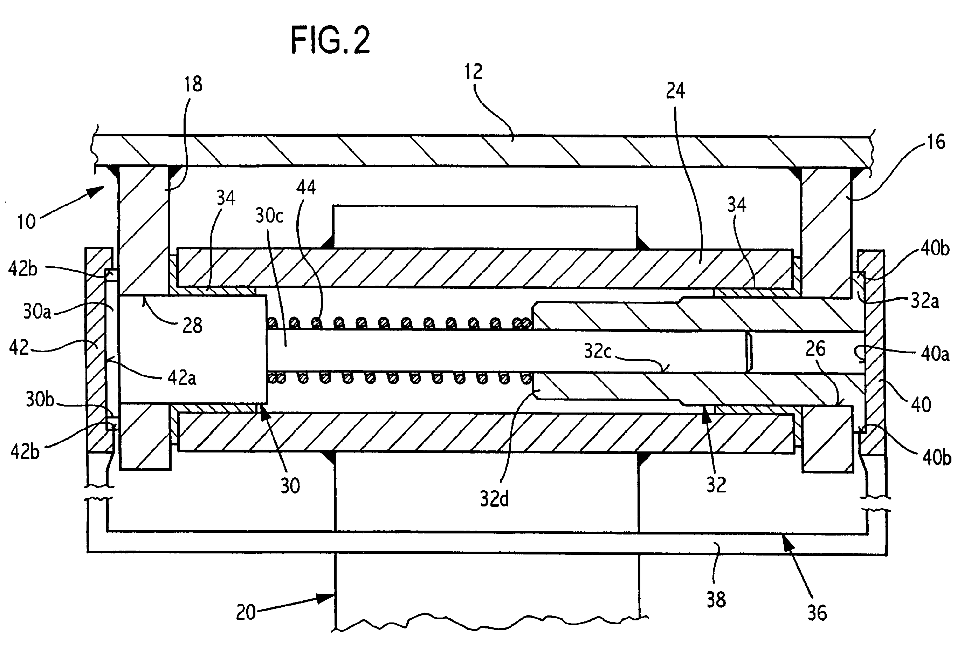

Gemäß Fig. 2 weist das Bremspedal 20 eine Lagerhülse 24 auf und ist über seitlich durch Bohrungen 26,28 der Schenkel 16,18 eingesteckte Lagerbolzen 30,32 unter Zwischenschaltung von Lagerbuchsen 34 schwenkbar gelagert.

Die Lagerbolzen 30,32 sind gegen Herausgleiten aus den Bohrungen 26,28 bzw. aus den Lagerbuchsen 34 durch ein U-förmiges Verriegelungselement 36 gehalten, dessen einstückig mit einem Basisabschnitt 38 verbundene Schenkel 40,42 Kopfabschnitte 30a,32a der Lagerbolzen 30,32 umschließen.

Ferner sind die Kopfabschnitte 30a,32a mit Schlüsselflächen 30b,32b (vgl. auch Fig. 1) versehen, die mit korrespondierenden Flanken von in die Schenkel 40,42 eingearbeitete Nuten 40a,42a formschlüssig zusammenwirken. Die Nuten 40a,42a sind von Nasen 40b,42b (vgl. Fig. 2) begrenzt, die das Verriegelungselement 36 in Richtung entlang der Nutenflanken formschlüssig an den Kopfabschnitten 30a,32a halten.

An dem Lagerbolzen 30 ist zudem ein im Durchmesser verringerter, rotationssymmetrischer Führungsstift 30c angeformt, der sich in einen Verlängerungsabschnitt 32d des mit einer korrespondierenden zentrischen Bohrung 32c versehenen Lagerbolzens 32 hinein erstreckt. Der Außendurchmesser des Verlängerungsabschnittes 32d ist wie ersichtlich ebenfalls verringert, um das Herausgleiten des Lagerbolzens 32 im Crashfall zu erleichtern.

Zwischen den beiden Lagerbolzen 30,32 und um den Führungsstift 30c herum ist eine Schraubendruckfeder 44 eingesetzt, die die beiden Lagerbolzen 30,32 gegen die Schenkel 40,42 des Verriegelungselementes 36 vorspannt.

Bei der Montage der dargestellten Pedallagerung wird das Bremspedal 20 mit der Lagerhülse 24 und den eingesetzten Lagerbuchsen 34 in den Pedalbock 10 in einer Flucht mit den Bohrungen 26,28 eingeschoben und es werden dann der Lagerbolzen 32 von der einen Seite und der Lagerbolzen 30 mit der aufgefädelten Schraubendruckfeder 44 von der anderen Seite durch die Bohrungen 26,28 hindurch eingeschoben. Danach wird unter Überwindung der durch die Schraubendruckfeder 44 bewirkten Vorspannung auf die Lagerbolzen 30,32 das Verriegelungselement 36 aufgeschoben und mittels der Nasen 40b,42b formschlüssig auf den Kopfabschnitten 30a,32a der Lagerbolzen 30,32 justiert.

Ggf. können auch weitere Pedale entsprechend in Kraftfahrzeugen üblichen Lagerböcken montiert und sodann die gesamte Montageeinheit an der Stirnwand 14 beispielsweise durch nicht dargestellte Schrauben durch die Lagerplatte 12 hindurch befestigt werden.

Gemäß Fig. 1 ist in der montierten Stellung des Lagerbockes 10 der Basisabschnitt 38 des Verriegelungselementes 36 relativ nahe an einer an dem Querträger 22 ausgebildeten Wand 46 positioniert.

Bei einem Frontalcrash des Kraftfahrzeuges wird ggf. die Stirnwand 14 mit dem deformierten Vorbau des Kraftfahrzeuges auf der Zeichnung Fig. 1 nach links dem Innenraum des Kraftfahrzeuges zu verformt, während der in Fahrtrichtung weiter hinten liegende Querträger seine Position beibehält. Dies führt dazu, dass der Basisabschnitt 38 des Verriegelungselementes 36 in Wirkverbindung mit der Wand 46 des Querträgers 22 gelangt bzw. durch Anschlagen an dieser Wand von den Kopfabschnitten 30a,32a abgleitet, wodurch die besagten Lagerbolzen 30,32 aufgrund der Vorspannung der Schraubendruckfeder 44 aus dem Lagerbock 10 bzw. den Schenkeln 16,18 herausgedrückt werden. Dementsprechend ist das Bremspedal 20 mit der Lagerhülse 24 frei zum Pedalbock 10 beweglich und es wird vermieden, dass das Bremspedal 20 durch den nicht dargestellten Druckstößel der Bremseinrichtung des Kraftfahrzeuges in den Fußraum auf der Zeichnung Fig. 1 nach links gedrückt wird.

## Patentansprüche

1. Pedallagerung für ein Kraftfahrzeug, insbesondere Bremspedallagerung, wobei das Pedal (20) um eine in einem Pedalbock (10) mittels eines Verriegelungselementes (36) gehaltene Achse schwenkbar ist und die Achse bei einer crashbedingten Verformung im Lagerbereich durch das Verriegelungselement (36) von dem Pedalbock (10) lösbar ist, und wobei die Achse durch zwei in eine Lagerhülse (24) des Pedales (20) und den U-förmigen Pedalbock (10) einsteckbare Lagerbolzen (30, 32) gebildet ist, die durch Federkraft entgegen der Einsteckrichtung vorgespannt sind und die durch das zumindest eine Verriegelungselement (36) gehalten sind, wobei das Verriegelungselement (36) mit einem in Fahrrichtung des Kraftfahrzeuges hinter dem Pedalbock (10) verlaufenden Querträger (22) in Wirkverbindung steht **dadurch gekennzeichnet, dass** die Federkraft mittels einer einzigen zwischen den beiden Lagerbolzen (30, 32) angeordneten und in der Lagerhülse (24) aufgenommenen Schraubendruckfeder (44) erzeugt ist.

2. Pedallagerung nach Anspruch 1, **dadurch gekennzeichnet, dass** das Verriegelungselement (36) ein U-förmiger Bügel ist, dessen Basisabschnitt (38) mit dem Querträger (22) in Wirkverbindung steht und dessen Schenkel (40, 42) die beiden Lagerbolzen (30, 32) entgegen der Federkraft halten.

3. Pedalbock nach den Ansprüchen 1 und 2, **dadurch gekennzeichnet, dass** das Verriegelungselement (36) formschlüssig an Kopfabschnitten (30a, 32a) der Lagerbolzen (30, 32) justiert ist.

4. Pedalbock nach Anspruch 3, **dadurch gekennzeichnet, dass** an den Schenkeln (40,42) des Verriegelungselementes (36) Nasen (40b, 42b) ausgebildet sind, die die Kopfabschnitte (30a, 32a) der Lagerbolzen (30, 32) formschlüssig umgreifen.

5. Pedallagerung nach einem der Ansprüche 1 bis 4, **dadurch gekennzeichnet, dass** der eine Lagerbolzen (30) einen im Durchmesser verringerten Führungsstift (30c) aufweist, der in einer zentrischen Bohrung (32c) des anderen Lagerbolzens (32) geführt ist.

6. Pedallagerung nach Anspruch 5, **dadurch gekennzeichnet, dass** die Schraubendruckfeder (44) auf dem Führungsstift (30c) des einen Lagerbolzens (30) angeordnet ist.

7. Pedallagerung nach Anspruch 5 oder 6, **dadurch gekennzeichnet, dass** der Lagerbolzen (32) mit der zentrischen Bohrung (32c) mit einem Verlängerungsabschnitt (32d) versehen ist, dessen Außendurchmesser gegenüber dem Durchmesser der Lagerbolzen (30, 32) verringert ist.

## Claims

1. Pedal mounting for a motor vehicle, especially a brake pedal mounting, wherein the pedal (20) can be articulated about an axle retained in a brake support (10) by a locking element (36) and the axle can be released from the brake support (10) by the locking element (36) in the event of deformation in the mounting region caused by a crash, and wherein the axle is formed by two mounting bolts (30, 32) that can be plugged into a mounting sleeve (24) of the pedal (20) and the U-shaped brake support (10) and that are pre-loaded by spring force in the direction opposite to that in which they are plugged in and that are retained by the at least one locking element (36), the locking element (36) being operatively associated with a cross member (22) that extends behind the brake support (10) as seen in the driving direction, **characterised in that** the spring force is produced by means of a single helical compression spring (44) that is arranged between the two mounting bolts (30, 32) and is received in the mounting sleeve (24).

2. Pedal mounting according to claim 1, **characterised in that** the locking element (36) is a U-shaped yoke whose base section (38) is operatively associated with the cross member (22) and whose limbs (40, 42) hold the two mounting bolts (30, 32) against the spring force.

3. Pedal mounting according to claims 1 and 2, **characterised in that** the locking element (36) is aligned with positive engagement at head sections (30a, 32a) of the mounting bolts (30, 32).

4. Pedal mounting according to claim 3, **characterised in that** projections (40b, 42b) are formed on the limbs (40, 42) of the locking element (36) which embrace the head sections (30a, 32a) of the mounting bolts (30, 32) with positive engagement.

5. Pedal mounting according to one of claims 1 to 4, **characterised in that** the one mounting bolt (30) has a guide pin (30c) of reduced diameter which is guided in a central bore (32c) of the other mounting bolt (32).

6. Pedal mounting according to claim 5, **characterised in that** the helical compression spring (44) is arranged on the guide pin (30c) of the one mounting bolt (30)

7. Pedal mounting according to claim 5 or 6, **characterised in that** the mounting bolt (32) with the central bore (32c) is provided with an extension section (32d) whose outer diameter is reduced as compared to the diameter of the mounting bolts (30, 32).

## Revendications

1. Palier de pédale pour un véhicule automobile, en particulier un palier de pédale de frein, la pédale (20) étant orientable autour d'un axe maintenu dans un support de pédale (10) à l'aide d'un élément de verrouillage (36) et l'axe étant détachable du support de pédale (10) en cas d'une déformation due à un crash dans la zone du palier grâce à l'élément de verrouillage (36) et l'axe étant formé par deux boulons d'appui (30,32)insérables dans une douille de palier(24) de la pédale (20) et le support de pédale en forme de U (10), lesquels sont précontraints par une force élastique contre le sens d'insertion et sont maintenus par au moins un élément de verrouillage (36), l'élément de verrouillage (36) étant en relation active avec une barre transversale (22) s'étendant dans le sens de conduite du véhicule automobile derrière le support de pédale (10), **caractérisé en ce que** la force élastique est générée à l'aide d'un unique ressort cylindrique de pression (44) disposé entre les deux boulons d'appui (30,32) et logé dans la douille de palier (24).

2. Palier de pédale selon la revendication 1, **caractérisé en ce que** l'élément de verrouillage (36) est un étrier en forme de U, dont la section de base (38) est en relation active avec la barre transversale (22) et dont les branches (40,42) retiennent les deux boulons d'appui (30,32) contre la force élastique.

3. Support de pédale selon les revendications 1 et 2, **caractérisé en ce que** l'élément de verrouillage (36) est ajusté par coopération de forme aux sections de tête (30a,32a) des boulons d'appui (30,32).

4. Support de pédale selon la revendication 3, **caractérisé en ce que** des butoirs (40b,42b)sont développés sur les branches (40,42) de l'élément de verrouillage (36), butoirs qui enveloppent par coopération de forme les sections de tête (30a,32a) des boulons d'appui (30,32).

5. Palier de pédale selon l'une des revendications 1 à 4, **caractérisé en ce que** l'un des boulons d'appui (30) présente une tige de guidage (30c) de diamètre réduit, qui est guidée dans un alésage centré (32c) de l'autre boulon d'appui (32).

6. Palier de pédale selon la revendication 5, **caractérisé en ce que** le ressort cylindrique de pression (44) est disposé sur la tige de guidage (30c) de l'un des boulons d'appui (30).

7. Palier de pédale selon la revendication 5 ou 6, **caractérisée en ce que** le boulon d'appui (32) avec l'alésage centré (32c) est pourvu d'une section prolongée (32d), dont le diamètre extérieur est réduit par rapport au diamètre des boulons d'appui (30,32).
